# EUROPÄISCHE PATENTSCHRIFT

(11) **EP 1 202 829 B1**
(45) Veröffentlichungstag und Bekanntmachung des Hinweises auf die Patenterteilung: **13.10.2004**
(21) Anmeldenummer: 00988677.1
(22) Anmeldetag: 01.12.2000
(51) Int. Cl.: B23B 49/00

(54) **HANDWERKZEUGMASCHINE MIT TIEFENANSCHLAG**
HAND MACHINE TOOL WITH DEPTH STOP
MACHINE-OUTIL A MAIN COMPORTANT UNE BUTEE DE PROFONDEUR

(30) Priorität: 10.02.2000 DE 10006042
(43) Veröffentlichungstag der Anmeldung: 08.05.2002
(73) Patentinhaber: ROBERT BOSCH GMBH, 70442 Stuttgart (DE)
(72) Erfinder: WANEK, Helmut, 74321 Bietigheim-Bissingen (DE); HECKMANN, Markus, 70794 Filderstadt (DE)
(86) Internationale Anmeldenummer: PCT/DE2000/004279
(87) Internationale Veröffentlichungsnummer: WO 2001/058630

(56) Entgegenhaltungen:
- DE-A- 2 832 429
- DE-A- 3 632 377
- GB-A- 2 288 757

## Beschreibung

Die Erfindung geht aus von einer Handwerkzeugmaschine nach dem Oberbegriff des Anspruchs 1 (siehe GB 22 88 757).

Es sind Handwerkzeugmaschinen, insbesondere Handbohrmaschinen und Bohrhämmer mit einem am Gehäusehals befestigbaren Tiefenanschlag bekannt, mit dem ein Bohren von Löchern mit annähernd gleicher einstellbarer Tiefenbegrenzung möglich ist. Bei den bekannten Handwerkzeugmaschinen muß zum Einstellen des Tiefenanschlags auf ein gewünschtes Maß eine Klemmschraube gelöst werden, damit der stabförmige Tiefenanschlag in seiner Längsführung verstellbar ist. Sodann ist anschließend an dessen gewählte Einstellposition Die Klemmschraube wieder festzudrehen, um ein ungewolltes Ändern der Einstellposition zu verhindern, wobei das Lösen und Festdrehen der Klemmschraube zeitaufwendig, umständlich und wegen der Kraftschlüssigen Befestigungsart unsicher ist.

### Vorteile der Erfindung

Die Handwerkzeugmaschine nach dem Anspruch 1 hat den Vorteil, daß der Tiefenanschlag bequem und schnell einstellbar ist, ohne die Handwerkzeugmaschine auf einer Unterlage abzustützen.

Außerdem ist durch die formschlüssige Festlegung des Tiefenanschlags dessen Position sicherer, weil weniger leicht ungewollt verstellbar.

### Zeichnung

Nachstehend ist die Erfindung anhand eines Ausführungsbeispiels mit zugehöriger Zeichnung näher erläutert

Es zeigen
Figur 1 eine räumliche Darstellung eines erfindungsgemäßen Bohrhammers mit Tiefenanschlag

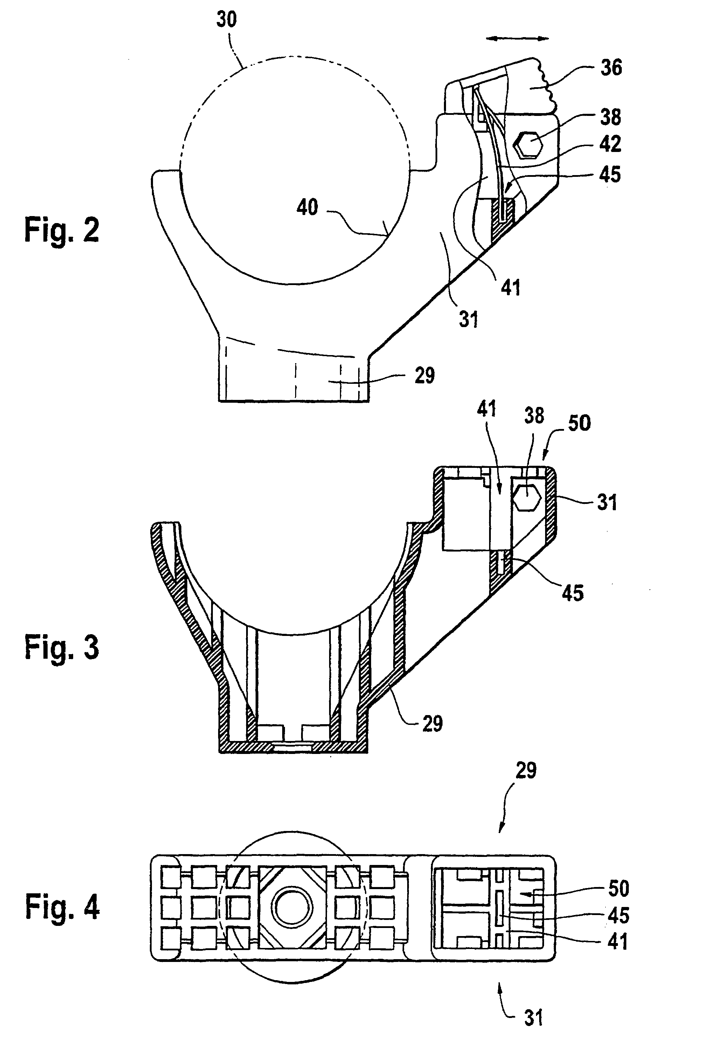

Figur 2 eine Draufsicht des Zusatzhandgriff-Fortsatzes mit Schiebetaste
Figur 3 einen Querschnitt des Zusatzhandgriff-Fortsatzes
Figur 4 eine Oberansicht des Zusatzhandgriff-Fortsatzes

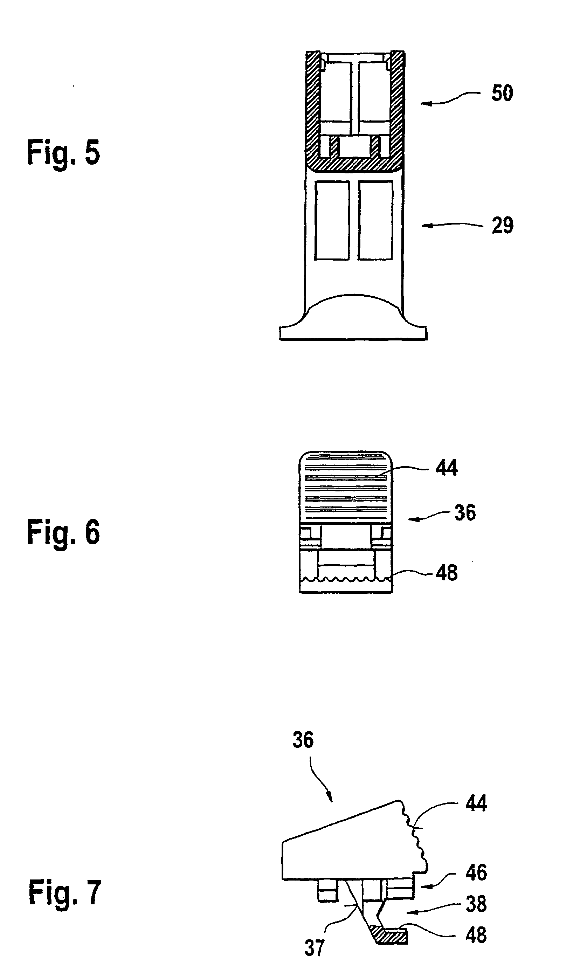

Figur 5 ein Längsschnitt des Zusatzhandgriff-Fortsatzes
Figur 6 eine Draufsicht der Schiebetaste
Figur 7 eine Seitenansicht der Schiebetaste

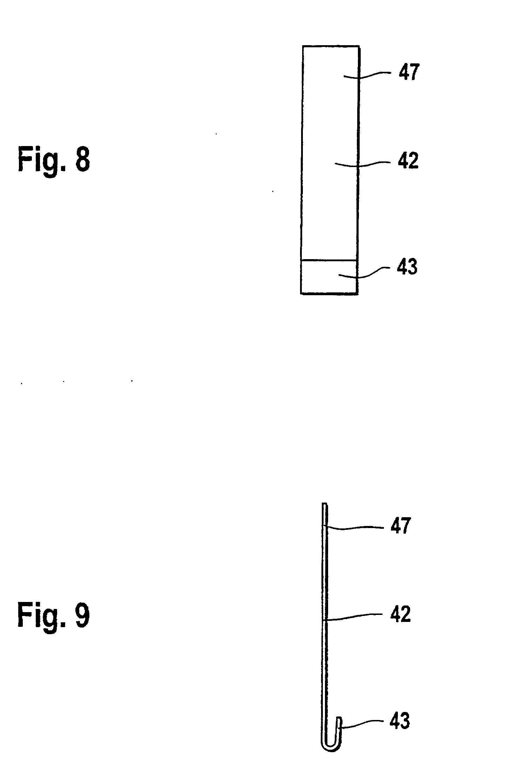

Figur 8 eine Draufsicht der Blattfeder und
Figur 9 eine Seitenansicht der Blattfeder

### Beschreibung des Ausführungsbeispiels

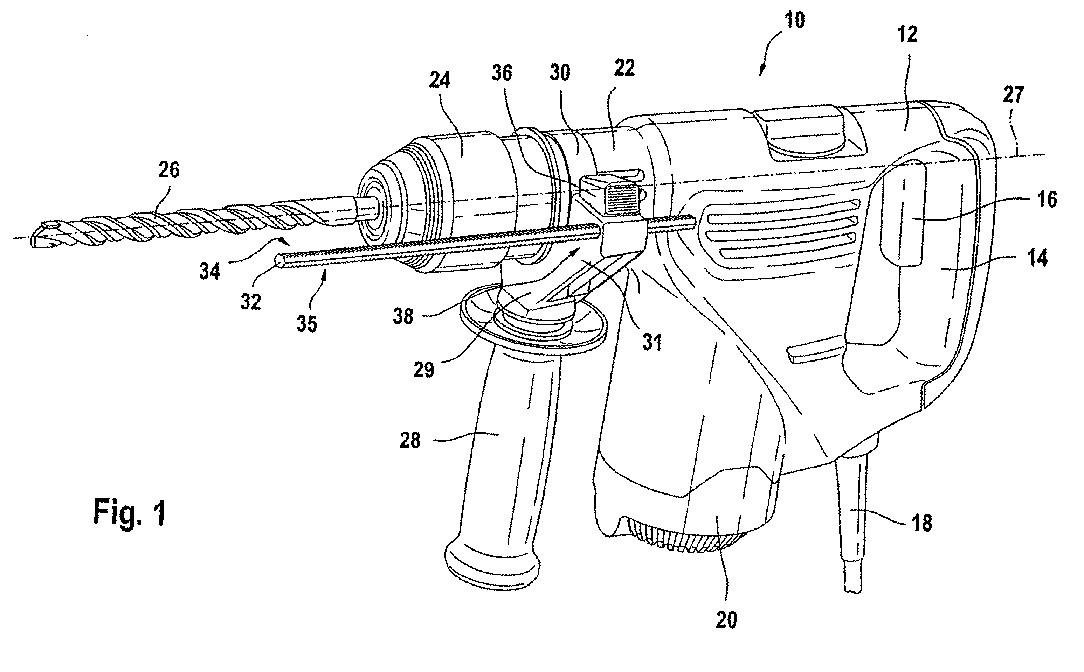

Figur 1 zeigt eine räumliche Darstellung einer als Bohrhammer ausgestalteten Handwerkzeugmaschine 10 in der Ansicht von links vorn. Die Handwerkzeugmaschine hat ein Gehäuse 12 mit einem als Spatengriff ausgestalteten Handgriff 14, der eine Schalttaste 16 enthält, aus der nach unten ein E-Kabel 18 zur Energieversorung des nichtdargestellten, im Inneren eines zum Gehäuse 12 gehörenden Motor-Gehäuse 20 angeordneten Motors austritt. Das Motor-Gehäuse 20 ist gegenüber einer Längsachse 27 der Handwerkzeugmaschine 10 rechtwinklig abgewinkelt angeordnet. Die Längsachse 27 ist durch einen Maschinenhals 22, ein Spannfutter 24 und ein als Bohrer ausgestaltetes Einsatzwerkzeug 26 definiert.

Ebenfalls rechtwinklig nach unten tritt ein Zusatzhandgriff 28 von der Längsachse 27 weg, der am Maschinenhals 22 mittels eines Spannbandes 30 abnehmbar gehaltert ist.

Der Zusatzhandgriff 28 enhält einen oberen Fortsatz 29 mit einer konkaven, radialen Abstützfläche 40, die zur Anlage an den Maschinenhals 22 bestimmt ist und die dem Zusatzhandgriff 29 einen sicheren Halt am Gehäuse 12 gibt.

Beiderseits der konkaven, radialen Abstützfläche 40 bildet der obere Fortsatz 29 - in Betrachtungsrichtung von vorn - zwei Schenkel, von denen nur der größere Tragschenkel 31 näher bezeichnet ist. Darin ist ein als Sechskantstab ausgestalteter Tiefenanschlag 32 drehgesichert längsverschiebbar in einer als Sechskantbohrung ausgestalteten Längsführung 38 gelagert. Der Tiefenanschlag 32 hat an gegenüberliegenden Sechkantflächen ein oberes und ein unteres Zahnprofil 34, 35 mit dem er sich formschlüssig in der Längsführungs 38 lösbar festhält.

Der Tragschenkel 32 trägt an seinem freien Ende eine verschiebbar gelagerte Taste 36. Diese ist mit Haltefüßen 46 in einer schwalbenschwanzartigen Längsführung 50 des freien Endes des Tragschenkels 31 gegen Herausfallen gesichert.

Im Inneren des Tragschenkels 32 ist eine zentrale, sacklochartige Ausnehmung 41 zur Aufnahme einer Blattfeder 42 angeordnet, die darin verschwenkbar gelagert ist. Die Blattfeder 42 ist mit ihrem unteren Ende 43 in einem im Boden der Ausnehmung 41 vorhandenen Einspannschlitz 45 lösbar gesteckt und eingespannt. Die unten umgebogenen und dort eingespannte Blattfeder 42 stützt sich mit ihrem oberen Ende 47 gegen eine schräge Druckfläche 44 der Taste 36, so daß diese elastisch seitlich hin- und her verschiebbar ist.

Die Längsführung 38 zur Aufnahme des Tiefenanschlags 32 im Tragschenkel 31 setzt sich im unteren Bereich der Taste 36 als fluchtende, seitlich offene Längsöffnung fort, deren unterer, u-schenkelartiger Bereich innen ein Gegenzahnprofil 48 trägt, das an die Zahnprofile 34, 35 des Tiefenanschlags 32 angepaßt ist und mit diesen in formschlüssigen Eingriff bringbar ist.

Durch die vorgespannte Blattfeder 42 wird die Taste 36 mit ihrem Gegenzahnprofil 48 im Eingriff zum sechkantstabförmigen Tiefenanschlag 32 gehalten, so daß er in dieser Position formschlüssig am Zusatzhandgriff 28 unverschiebbar festgelegt ist.

Durch Drücken der Taste 36 löst sich deren Gegenverzahnung 48 aus dem ihr zugewandten Zahnprofil 35 des Tiefenanschlags 36. Sobald die Taste 36 freigegeben wird, rastet ihre Gegenverzahnung 48 in das Zahnprofil 35 des Tiefenanschlags 36 ein und hält diesen fest.

## Patentansprüche

1. Handwerkzeugmaschine (10) mit einem Gehäuse (12), das an einem Zusatzhandgriff (28) einen einstellbaren, länglichen Tiefenanschlag (32) trägt, der mittels einer am Zusatzhandgriff (28) gelagerten, zwischen zwei Endlagen elastisch verstellbaren Taste (36) in deren unbetätigter Endlage arretiert und in deren betätigten Endlage frei verschiebbar ist wobei der Tiefenanschlag (32) formschlüssig gegenüber der Handwerkzeugmaschine (10) festlegbar ist, **dadurch gekennzeichnet, dass** die Taste eine zwischen den zwei Endlagen geradverschiebbare Schiebetaste (36) ist.

2. Handwerkzeugmaschine nach Anspruch 1, **dadurch gekennzeichnet, daß** der Zusatzhandgriff (28) oben die Schiebetaste (36) und eine Längsführung (38) des Tiefenanschlags (32) trägt.

## Claims

1. Powered hand tool (10) having a housing (12) which, on an auxiliary handle (28), carries an adjustable, elongated depth stop (32) which, by means of a button (36) mounted on the auxiliary handle (28) and elastically adjustable between two end positions, is locked in the unactuated end position of the said button (36) and is freely displaceable in its actuated end position, it being possible for the depth stop (32) to be secured in a positive-locking manner relative to the powered hand tool (10), **characterized in that** the button is a sliding button (36) displaceable rectilinearly between the two end positions.

2. Powered hand tool according to Claim 1, **characterized in that** the auxiliary handle (28), at the top, carries the sliding button (36) and a longitudinal guide (38) of the depth stop (32).

## Revendications

1. Machine-outil portative (10) avec un boîtier (12), qui porte au niveau d'une poignée supplémentaire (28) une butée de profondeur (32) allongée réglable qui, au moyen d'une touche (36) logée sur la poignée supplémentaire (28) et élastiquement mobile entre deux positions finales, est bloquée dans la position finale non actionnée de celle-ci et librement déplaçable dans la position finale actionnée de celle-ci, la butée de profondeur (32) pouvant être fixée par complémentarité de formes contre la machine-outil portative (10),
**caractérisée en ce que**
la touche est une touche coulissante (36) déplaçable en ligne droite entre les deux positions finales.

2. Machine-outil portative selon la revendication 1,
**caractérisée en ce que**
la poignée supplémentaire (28) porte en haut la touche coulissante (36) et un guidage longitudinal (38) de la butée de profondeur (32).
